# EUROPEAN PATENT SPECIFICATION

(11) **EP 1 768 129 B1**
(45) Date of publication and mention of the grant of the patent: **18.05.2011**
(21) Application number: 05108719.5
(22) Date of filing: 21.09.2005
(51) Int. Cl.: G11B 27/36, G11B 27/34, G11B 27/32, G11B 27/034

(54) **Disk finalization systems and methods**
Systeme und Verfahren zur Plattenfinalisierung
Systèmes et procédés pour finaliser des disques

(43) Date of publication of application: 28.03.2007
(73) Proprietor: Mediatek Inc., Hsinchu City (TW)
(72) Inventor: Chao, Chien-Ming, Songshan District 105 Taipei City (TW); Lui, Pin-Chou, 220 Banciao City Taipei County (TW)
(74) Representative: Blasberg, Tilo

(56) References cited:
- US-A1- 2003 002 861
- US-A1- 2003 058 352
- US-A1- 2003 081 525
- US-A1- 2003 152 365
- PATENT ABSTRACTS OF JAPAN vol. 2003, no. 03, 5 May 2003 (2003-05-05) -& JP 2002 324321 A (KENWOOD CORP), 8 November 2002 (2002-11-08)

## Description

### BACKGROUND

The invention relates to real-time optical recording, and more particularly, to methods and devices for disk finalization.

When data is recorded on an optical disk such as a video CD (VCD), digital versatile disc (DVD), super audio CD (SACD) and similar, a specified space on the disk is reserved. After all data is completely recorded, a disk finalization operation is performed to write relevant data, typically file system related data, in the reserved space to provide system information recognizable by various optical drives, and indicate that no more content can be recorded on the disk. Such disk finalization operations, however, are typically triggered via an on-screen display (OSD) or user interface (UI), which requires users to manually trigger the disk finalization operation after the disks are completely recorded.

Patent Abstracts of Japan, vol. 2003, no. 03, May 5, 2003 & JP 324321 A (Kenwood Corp.) discloses a method of disk finalization for an optical read/write system used for dubbing data from a CD to a CD-R, wherein during recording of the data on the CD-R a recording state is detected. The method comprises the following steps: determining whether triggering of a disk finalization operation is required by monitoring a recording process for recording or editing data on the CD-R loaded in the optical read/write system; and after determining that triggering of the disk finalization operation is required, performing the disk finalization operation to store disk closed information on the CD-R, wherein the disk closed information comprises information regarding that no more content can be recorded on the optical storage medium. In this method, the residue of the storage capacity of the CD-R is detected based on the CD-R data transmitted from the CD-R write system. In this method fatal write or read errors are not detected and evaluated for deciding whether or not the disk finalization is to be performed.

US 2003/0081525 A1 discloses a disk finalizing apparatus and method. To ensure that the finalized recording medium can be replayed by any type of playback apparatus, an additional finalizing may be performed that makes the recording medium the same as processed by a normal, i.e. simple finalizing.

### SUMMARY

It is an object of the present invention to provide a method and system for disk finalization capable of performing a disk finalization more reliably and securely.

This problem is solved by a method of disk finalization according to claim 1, by a machine-readable storage medium according to claim 8 configured for carrying out such a method and by a system for disk finalization according to claim 9. Further advantageous embodiments are the subject-matter of the dependent claims.

In a method of disk finalization for an optical read/write system according to the present invention a recording state is detected during recording of data on the optical storage medium. According to the invention the method comprises the following additional steps: when the recording state indicates that fatal write or read errors have occurred, or an error has occurred while accessing a file system section, determining that triggering of a disk finalization operation is required; and after determining that triggering of the disk finalization operation is required, performing the disk finalization operation to store disk closed information on the optical storage medium, wherein the disk closed information comprises information regarding that no more content can be recorded on the optical storage medium.

The disk closed information may be stored in a lead-in area of the optical storage medium. An embodiment of an automated finalization operation may further comprise steps to determine triggering timings, as described in the following. When the recording state indicates that no more content can be recorded on the optical storage medium, or the optical storage medium is full, it is determined triggering of the disk finalization operation is required. When the recording state indicates that the data is completely recorded, it is determined whether the remaining space on the optical storage medium is less than a predetermined threshold. If the remaining space on the optical storage medium is less than the predetermined threshold, it is determined that triggering of the disk finalization operation is required.

A data/program area of the optical storage medium may comprise a reserved section for storing the disk closed information, and at least one file system section storing file system data containing file entry information regarding where a specific file is located.

Another embodiment of an automated disk finalization method may further comprise steps during a disk finalization operation, as described in the following. The file system data is retrieved from a memory buffer of the optical read/write system, and the retrieved file system data is stored as the disk closed information in the reserved section. Before the step of retrieving the file system data from the memory buffer, it may be determined whether the file system data prepared to be duplicated is completely stored in the memory buffer, and, if not, a file system data is retrieved from the file system section of the optical storage medium and the retrieved file system data is stored in the memory buffer for the disk finalization operation.

According to another embodiment according to the present invention there is provided a machine-readable storage medium storing a computer program which, when executed by a control unit of an optical read/write system, performs the above methods for disk finalization.
A system for disk finalization according to the present invention comprises a mechanical device accessing data from a loaded optical storage medium and a processing module. According to the present invention the processing module detects a recording state during recording of data on the optical storage medium, and, when the recording state indicates that fatal write or read errors have occurred, or an error has occurred when the mechanical device is accessing a file system section, determines that triggering of the disk finalization operation is required, and, after determining that triggering of the disk finalization operation is required, performs the disk finalization operation by instructing the mechanical device to record disk closed information on the optical storage medium, wherein the disk closed information comprises information regarding that no more content can be recorded on the optical storage medium.

The disk closed information may be recorded in a lead-in area of the optical storage medium. The processing module may further detect a recording state during recording of data on the optical storage medium. The processing module, when the recording state indicates that no more content can be recorded on the optical storage medium, or the optical storage medium is full, determines that triggering of the disk finalization operation is required. The processing module, when the recording state indicates that the data is completely recorded, determines whether the remaining space on the optical storage medium is less than a predetermined threshold, and, if the remaining space on the optical storage medium is less than the predetermined threshold, determines that triggering of the disk finalization operation is required.

A data/program area of the optical storage medium may comprise a reserved section for storing the disk closed information, and at least one file system section storing file system data containing file entry information regarding where a specific file is located. An embodiment of a system for automated disk finalization may further comprise a memory device comprising a memory buffer. The processing module, during the disk finalization operation, may further retrieve the file system data from the memory buffer and store the retrieved file system data as the disk closed information in the reserved section. The processing module may further determine whether the file system data prepared to be duplicated is completely stored in the memory buffer before retrieving of the file system data, and, if not, retrieve file system data from the file system section and store the retrieved file system data in the memory buffer.

### DESCRIPTION OF THE DRAWINGS

The invention will become more fully understood by referring to the following detailed description of embodiments with reference to the accompanying drawings, wherein:
Fig. 1 is a diagram of an embodiment of an optical read/write system;
Fig. 2 is a schematic diagram of an optical recordable storage medium;
Figs. 3 and 4 are flowcharts showing embodiments of automated disk finalization methods;
Fig. 5 is a schematic diagram of exemplary data organization in a program/data area of a DVD+R disk;
Fig. 6 is a schematic diagram of exemplary data organization in a program/data area of a DVD-R disk;
Fig. 7 is a schematic diagram of exemplary data organization in a program/data area of a DVD-RW disk;
Fig. 8 is a schematic diagram showing occurrence of fatal writing errors;
Fig. 9 is a flowchart showing an embodiment of a DVD+R disk finalization operation;
Fig. 10 is a flowchart showing an embodiment of a manual disk finalization method that serves for a better understanding of the present invention;
Fig. 11 is a diagram of a storage medium storing a computer program capable of providing an automated disk finalization function.

### DESCRIPTION

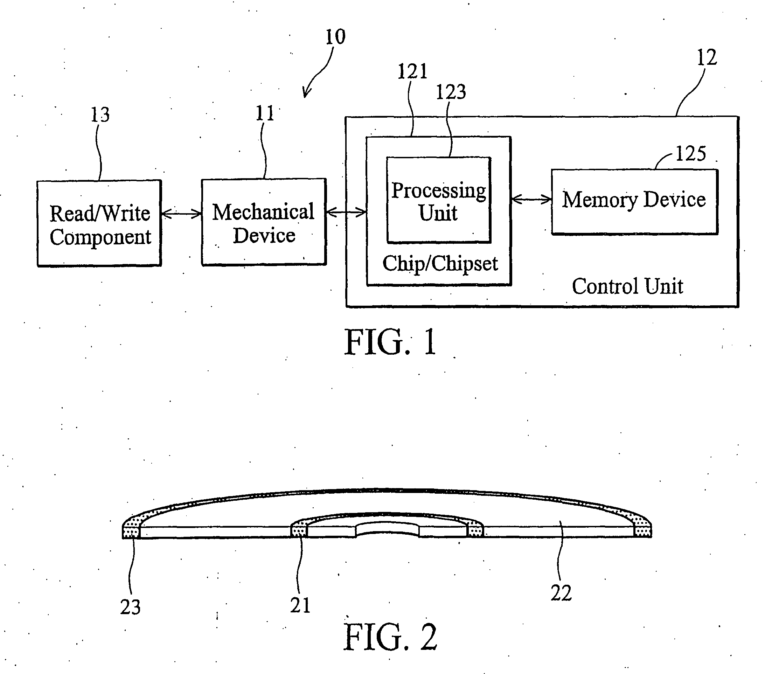

Fig. 1 is a diagram of an embodiment of an optical read/write system 10 comprising a mechanical device 11, a control unit 12 and a read/write component 13. The control unit 12 comprises a chip/chipset 121 and a memory device 125. The memory device 125, such as a Dynamic Random Access Memory (DRAM), a Synchronous DARM (SDRAM), a flash memory and the like, stores data when the optical read/write system 10 is carrying data recording. The chip/chipset 121 comprises a processing unit 123. Those skilled in the art will recognize that the processing unit 123, and/or memory device 125 may be configured in the chip/chipset 121 or outside of the chip/chipset 121. The chip/chipset 121 comprises a data reading logic and a data writing logic. The data reading logic directs the read/write component 13 to read data from an optical storage medium, and the data writing logic directs the read/write component 13 to write data on an optical storage medium. The read/write component 13, mechanical device 11 and the control unit 12 are essential parts of an optical read/write system 10 such as VCD, DVD -R, +R, -RW and SACD drives, recorders, and the like. Those skilled in the art will recognize that additional or different components may be provided in the optical read/write system 10.

Memory device 125 comprises a memory buffer. In order to simplify the following description, the chip/chipset 121 or the processing unit 123 may be referred to as a processing module.

Fig. 2 is a schematic diagram of an optical recordable storage medium. A conventional optical recordable storage medium measures 12cm in diameter, and includes a lead-in area 21, a program/data area 22 and a lead-out area 23. The audio or computer data is stored in the program/data area 22 from radius 25mm to radius 58mm between the lead-in area 21 and the lead-out area. For example, the CD lead-in area precedes track one. This lead-in area 21 records information such as table of contents (TOC) data preceding the program/data area 22. The main channel in the CD lead-in area contains audio or data null information. This area is coded as track zero but is not directly addressable via the command set. The Q sub-channel in this area is coded with the TOC information. The CD lead-out area is beyond the last information track. The main channel in the CD lead-out area contains audio or data null information. Alternatively, the DVD lead-in area comprises physical sectors of 1.2mm wide or greater adjacent to the inside of the program/data area. This lead-in area precedes the program/data area that records the control data. The DVD lead-out area comprises physical sectors of 1.0mm wide or greater adjacent to the outside of the program/data area in a single layered disc for a parallel track path (PTP) disc, or area comprising physical sectors 1.2mm wide or more adjacent to the inside of the data area in layer 1 of an opposite track path (OTP) disc.

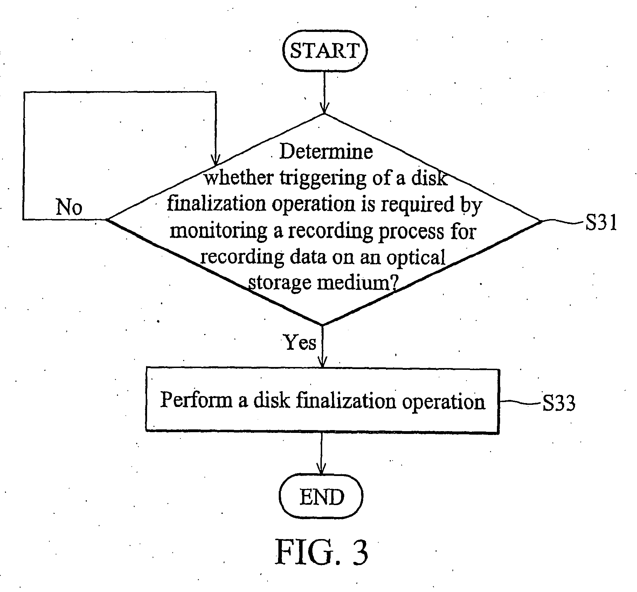

Fig. 3 is a flowchart showing an embodiment of an automated disk finalization method, performed by a processing module. In step S31, it is determined whether triggering of a disk finalization operation is required by monitoring a recording process for recording data on an optical storage medium. In step S33, after determining that triggering of the disk finalization operation is required, the disk finalization operation is performed to store disk closed information on the optical storage medium. The disk closed information comprises information regarding that no more content can be recorded on the optical storage medium. The disk finalization operation is performed to ensure the content stored in the optical storage medium can be played or accessed by an optical disk drive or player in an ordinary manner.

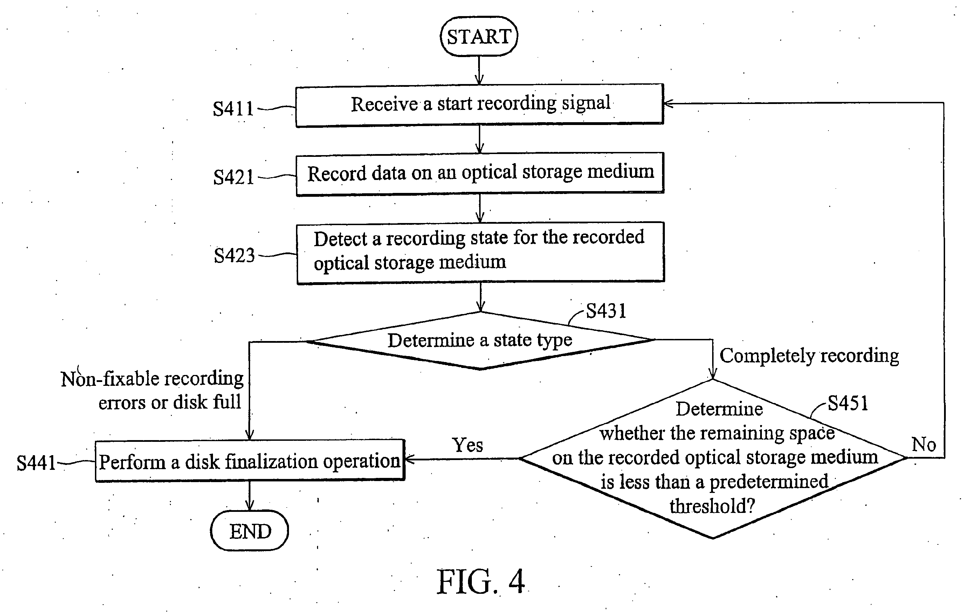

Fig. 4 is a flowchart showing another embodiment of an automated disk finalization method, performed by a processing module of an optical read/write system 10 (as shown in Fig. 1). In step S411, a start recording signal is received by the processing module.

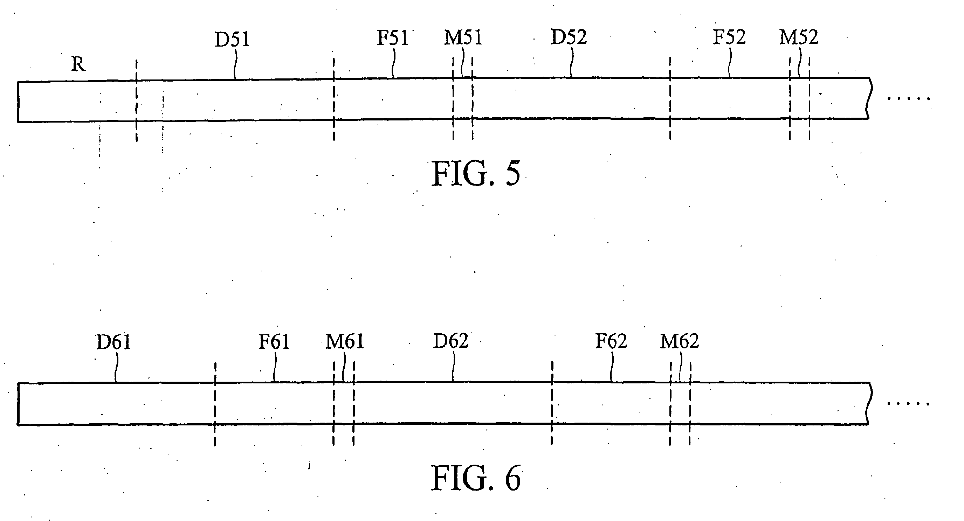

In step S421, the optical read/write system starts recording data on an optical storage medium loaded in the optical read/write system. Fig. 5 is a schematic diagram of exemplary data organization in a program/data area (as shown in 22 of Fig. 2) of a DVD+R disk. The program/data area of the DVD+R disk comprises a reserved section R, multiple data file sections D51, D52 and so on, file system sections F51, F52 and so on, and mapping sections M51, M52 and so on. In the first instance of recording, the reserved section R is reserved for a sequent disk finalization process, and data files containing various binary, text, teletext, video, audio streams and the similar, are recorded in data file section D51 and/or file system section F51, and, after all data files are recorded, file entry information regarding where the specific files are located is recorded in file system section F51 and specific codes representing the end of a session are recorded in the mapping section M51. In a subsequent recording session, data files are recorded in data file section D52 and/or file system section F52, and, after all data files are recorded, file entry information is recorded in file system section F52 and the specific codes are recorded in the mapping section M52. The remaining recording operations may be deduced by analogy. Note that data files recorded in the file system sections may be stored in a memory buffer of the memory device 125 (as shown in Fig. 1) for a subsequent disk finalization operation.

Fig. 6 is a schematic diagram of exemplary data organization in a program/data area (as shown in 22 of Fig. 2) of a DVD-R disk. The program/data area of the DVD-R disk comprises multiple data file sections D61, D62 and so on, file system sections F61, F62 and so on, and mapping sections M61, M62 and so on. In each recording session, data files containing various binary, text, teletext, video, audio streams and similar, are recorded in a relevant data file section and/or file system section, and, after all data files are recorded, file entry information regarding where the specific files are located is recorded in a relevant file system section and specific codes representing the end of a session are recorded in a relevant mapping section.

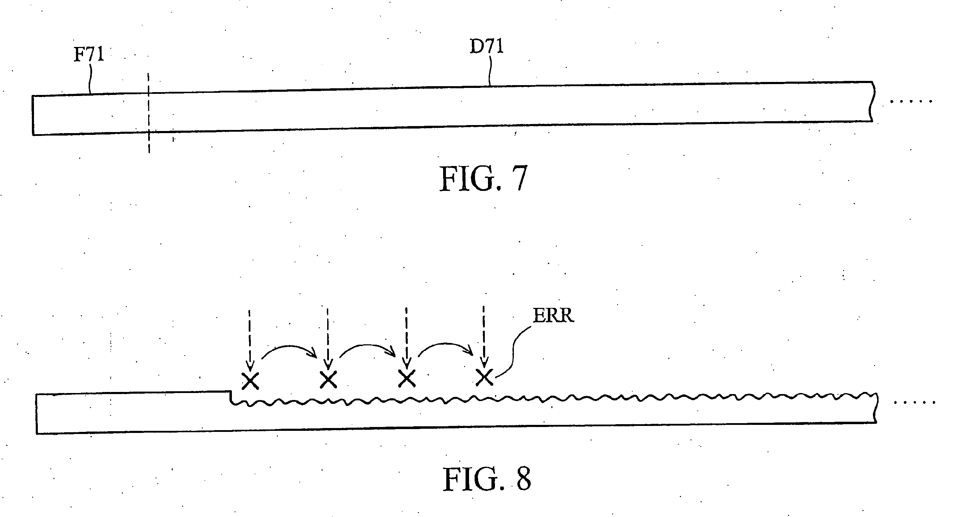

Fig. 7 is a schematic diagram of exemplary data organization in a program/data area (as shown in 22 of Fig. 2) of a DVD-RW disk. The program/data area of the DVD-RW disk comprises a file system section F71 and a data file section D71. In each recording session, data files containing various binary, text, teletext, video, audio streams and similar, are recorded in the data file section D71 and/or file system section F71, and, after all data files are recorded, file entry information regarding where the specific files are located is recorded in the file system section F71.

Referring to Fig. 4, in step S423, a recording state for the optical storage medium being recorded is monitored. In some embodiments, the recording state may indicate whether the recording process is under normal or abnormal condition. For example, the recording state may yield that no more content can be recorded on the loaded optical storage medium, occurrence of fatal errors, or that data is successfully recorded. In some embodiments of step S423, if the read/write component 13 (as shown in Fig. 1) does not successfully write data on the data/program area 22 (as shown in Fig. 2), an error handling mechanism may be initiated to solve the problem, however, if it is determined that the problem is caused by a fatal write error, the processing module may receive a signal indicating that fatal write error has occurred. When the read/write component 13 fails to write data on a particular location of the data/program area 22, some embodiments of the error handling mechanism controls the mechanical device 11 to move the read/write component 13 to write data at some other location. After one or multiple rewrites fail, a predetermined time or retry for location searching is reached, the processing module may receive a signal indicating that fatal write error has occurred, as shown in Fig. 8. In some embodiments, when the read/write component 13 does not successfully read data from or write data to a file system section, the processing module 123 may receive a signal indicating that fatal error has occurred, and the recording state of step S431 will yield a disk finalization operation (S441). In some other embodiments, when an optical storage medium is full and can not write additional data thereon, the processing module 123 may receive a signal indicating that the disk is full, thus the recording state of step S431 will also yield a disk finalization operation (S441). In step S423 and S431, when data is successfully recorded in a relevant data file section, file system section, and/or mapping section, the processing module may receive a signal indicating that the data is completely recorded.

In step S431, the state type is determined. If the determined state type indicates that fatal errors have occurred or the disk is full, the process proceeds to step S441 as an automated disk finalization is required. If the determined state type indicates that data is completely recorded, the process proceeds to step S451.

In step S451, it is determined whether the remaining space on the recorded optical storage medium is less than a predetermined threshold, and, if the remaining space is less than the predetermined threshold, the automated disk finalization is performed in step S441, otherwise, the process returns to step S411 for subsequent data recording.

In step S441, a disk finalization operation is performed. Note that the processing module, if required, may direct the mechanical device 11 and the read/write component 13 (as shown in Fig. 1) to complete the disk finalization operation. The disk finalization operation comprises storing disk closed information in lead-in and/or data/program area to indicate that no more content can be recorded on the loaded optical storage medium. In disk finalization of a DVD-R or DVD-RW disk, an anchor may be recorded next to the end of the data (i.e. the maximum length of data) in a data/program area (as shown in 22 of Fig. 2), representing an end point, and disk closed information is stored in the lead-in area (as shown in 21 of Fig. 2) to indicate that no more content can be recorded on the loaded disk.

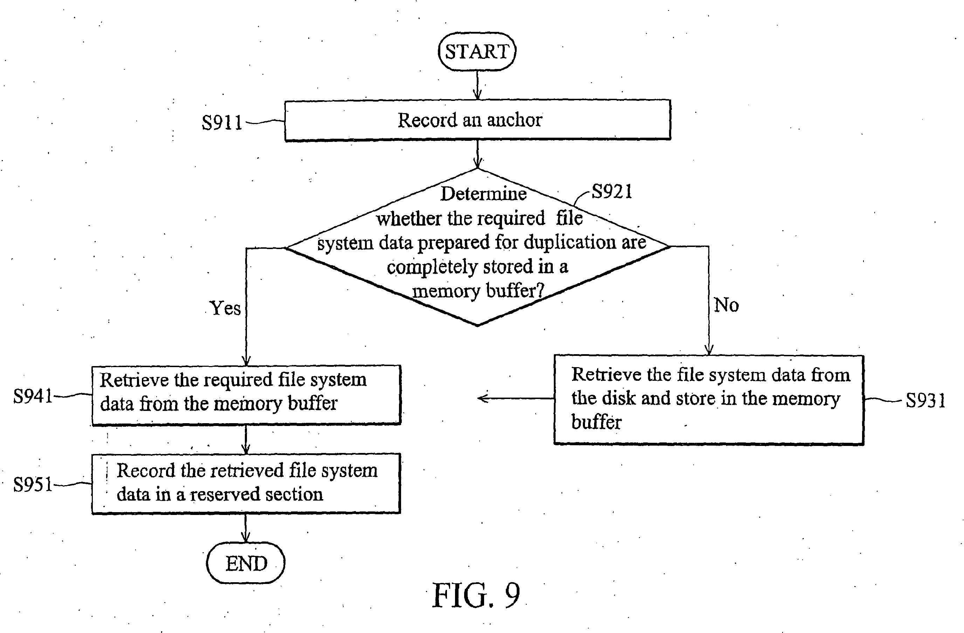

In a DVD+R, the disk finalization operation is more complicated. Fig. 9 is a flowchart showing an embodiment of a disk finalization operation for DVD+R. In step S911, an anchor is recorded next to the end of the data (i.e. the maximum length of data) in a data/program area. In step S921, it is determined whether the required file system data prepared to be duplicated in the reserved section R (as shown in Fig. 5) stored in a memory buffer of the memory device 125 (as shown in Fig. 1) is valid, and, if so, the process proceeds to step S941, and otherwise, to step S931. It may examine whether the required data files prepared to be duplicated in the reserved section R is completely stored in a memory buffer of the memory device 125. In step S931, the file system data is retrieved from previous data written on the disk and stored in the memory buffer. The file system data may comprise information related to navigation, file system, IFO tables, VOB menu, and user defined data. In step S941, the file system data is retrieved from the memory buffer, and in step S951, the file system data is recorded in the reserved section R (as shown in Fig. 5) for disk finalization.

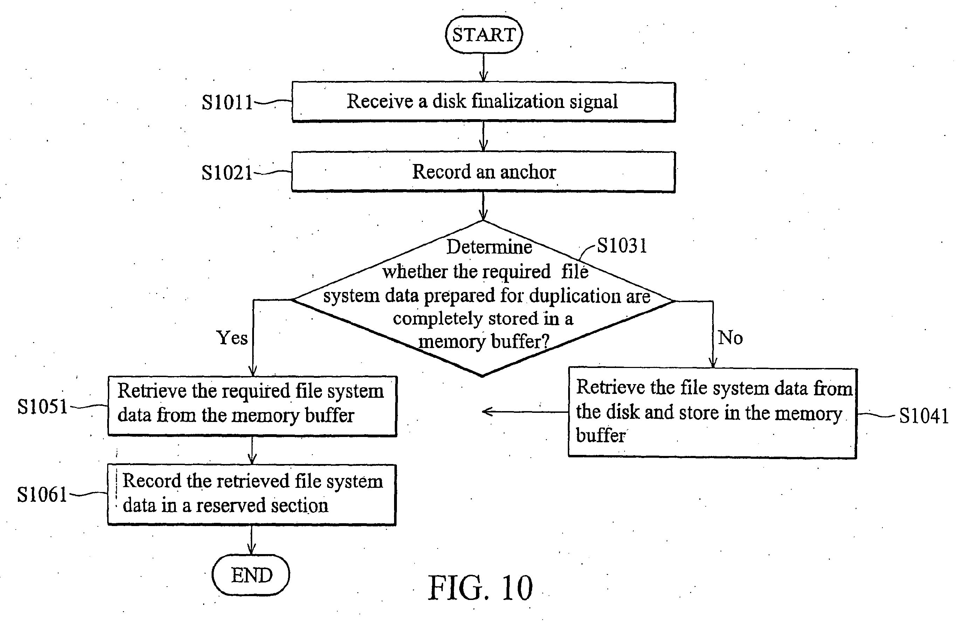

Fig. 10 is a flowchart showing another embodiment of a manual disk finalization method, performed by a processing module of an optical read/write system 10 (as shown in Fig. 1) . In step S1011, a disk finalization signal is received by the processing module. The disk finalization signal is triggerd via an on-screen display (OSD) or user interface (UI), which requires users to manually trigger a disk finalization operation after the disks are completely recorded. In step S1021, an anchor is recorded next to the end of the data (i.e. the maximum length of data) in a data/program area. In step S1031, it is examined whether the required file system data prepared to be duplicated in the reserved section R (as shown in Fig. 5) stored in a memory buffer of the memory device 125 (as shown in Fig. 1) is valid, and, if so, the process proceeds to step S1051, and otherwise, to step S1041. It may examine whether the required data files prepared to be duplicated in the reserved section R is completely stored in a memory buffer of the memory device 125. In step S1041, the file system data is retrieved from previous data written on the disk and stored in the memory buffer. The file system data may comprise information related to navigation, file system, IFO tables, VOB menu, and user defined data. In step S1051, the file system data is retrieved from the memory buffer, and in step S951, the file system data is recorded in the reserved section R (as shown in Fig. 5) for disk finalization.

Automated and manual disk finalization methods or certain aspects or portions thereof, may take the form of specific logic circuits embodied in the chip/chipset 121 (as shown in Fig. 1).

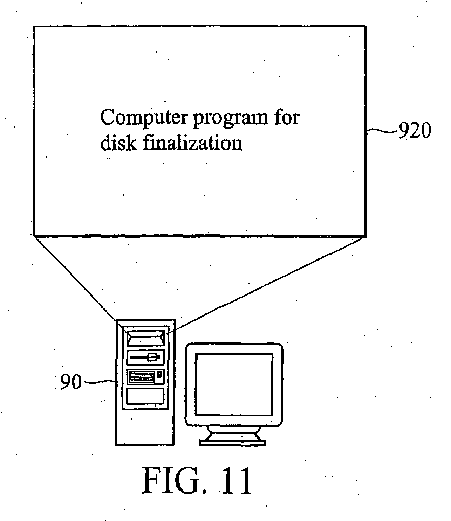

Also disclosed is a storage medium 90as shown in Fig. 11 storing a computer program 920 executing the automated and/or manual disk finalization method. The processing unit 123 (as shown in Fig. 1) executes disk finalization by loading computer readable program codes from the storage medium 90.

Automated and manual disk finalization methods, or certain aspects or portions thereof, may take the form of program codes (i.e., instructions) embodied in tangible media, such as floppy diskettes, CD-ROMS, hard drives, or any other machine-readable storage medium, wherein, when the program codes are loaded into and executed by a machine, such as a computer, the machine becomes an apparatus for practicing the invention. The disclosed methods may also be embodied in the form of program codes transmitted over some transmission medium, such as electrical wiring or cabling, through fiber optics, or via any other form of transmission, wherein, when the program codes are received and loaded into and executed by a machine, such as a computer, the machine becomes an apparatus for practicing the invention. When implemented on a general-purpose processor, the program codes combine with the processor to provide a unique apparatus that operate analogously to specific logic circuits.

Certain terms are used throughout the description and claims to refer to particular system components. As one skilled in the art will appreciate, consumer electronic equipment manufacturers may refer to a component by different names. This document does not intend to distinguish between components that differ in name but not function.

Although the invention has been described in terms of preferred embodiment, it is not limited thereto. Those skilled in this technology can make various alterations and modifications without departing from the scope and spirit of the invention. The invention is not limited to merely test or simulation applications. Any applications relating to cross-platform message exchanging should be covered by the scope of the invention. Therefore, the scope of the invention shall be defined and protected by the following claims.

## Claims

1. A method of disk finalization for an optical read/write system, comprising the following steps:
detecting a recording state during recording of data on the optical storage medium (S423);
**characterized by the additional steps of:**
when the recording state indicates that fatal write or read errors have occurred, or an error has occurred while accessing a file system section (F51, F52, F61, F62, F71), determining that triggering of a disk finalization operation is required (S451); and
after determining that triggering of the disk finalization operation is required, performing the disk finalization operation to store disk closed information on the optical storage medium (S441),
wherein the disk closed information comprises information regarding that no more content can be recorded on the optical storage medium.

2. The method of claim 1, wherein the disk closed information is stored in a lead-in area (21) of the optical storage medium.

3. The method of claim 1 or 2, further comprising:
when the recording state indicates that no more content can be recorded on the optical storage medium, or the optical storage medium is full, determining that triggering of the disk finalization operation is required (S441).

4. The method of any of the preceding claims, further comprising:
when the recording state indicates that data is completely recorded, determining whether the remaining space on the optical storage medium is less than a predetermined threshold (S451); and
if the remaining space on the optical storage medium is less than the predetermined threshold, determining that triggering of the disk finalization operation is required (5441).

5. The method of any of the preceding claims, wherein a data/program area (22) of the optical storage medium comprises a reserved section (R) for storing the disk closed information, and at least one file system section (F51, F52, F61, F62, F71) storing file system data containing file entry information regarding where a specific file is located.

6. The method of claim 5, wherein the step of performing the disk finalization operation further comprises:
retrieving the file system data from a memory buffer of the optical read/write system (S941); any
storing the retrieved file system data as the disk closed information in the reserved section (9551).

7. The method of claim 6, wherein the step of performing the disk finalization operation further comprises:
before retrieving the file system data from the memory buffer, determining whether the file system data prepared to be duplicated is completely stored in the memory buffer (S921); and
if the file system data is not completely stored in the memory buffer, retrieving a file system data from the file system section of the optical storage medium and storing the retrieved file system data in the memory buffer for the disk finalization operation (5931).

8. A machine-readable storage medium storing a computer program which, when executed, performs a disk finalization process for an optical read/write system in accordance with any of the preceding claims.

9. A system for disk finalization comprising:
a mechanical device (11) accessing data from a loaded optical storage medium; and
a processing module (121, 123); **characterized in that** the processing module (121, 123) detects a recording state during recording of data on the optical storage medium, and, when the recording state indicates that fatal write or read errors have occurred, or an error has occurred when the mechanical device (11) is accessing a file system section (F51, F52, F61, F62, F71), determines that triggering of the disk finalization operation is required, and, after determining that triggering of the disk finalization operation is required, performs the disk finalization operation by instructing the mechanical device to record disk closed information on the optical storage medium,
wherein the disk closed information comprises information regarding that no more content can be recorded on the optical storage medium.

10. The system of claim 9, wherein the disk closed information is recorded in a lead-in area (21) of the optical storage medium.

11. The system of claim 10, wherein the processing module (121, 123) detects a recording state during recording of data on the optical storage medium, and, when the recording state indicates that no more content can be recorded on the optical storage medium, or the optical storage medium is full, determines that triggering of the disk finalization operation is required.

12. The system of any of claims 9 to 11, wherein the processing module (121, 123) detects a recording state during recording of data on the optical storage medium, determines whether the remaining space on the optical storage medium is less than a predetermined threshold when the recording state indicates that data is completely recorded, and, if the remaining space on the optical storage medium is less than the predetermined threshold, determines that triggering of the disk finalization operation is required.

13. The system of any of claims 9 to 12, wherein a data/program area (22) of the optical storage medium comprises a reserved section (R) for storing the disk closed information, and at least one file system section (F51, F52, F61, F62, F71) storing file system data containing file entry information regarding where a specific file is located.

14. The system of claim 13, further comprising a memory device (125) comprising a memory buffer, wherein the processing module (121, 123), during the disk finalization operation, retrieves the file system data from the memory buffer and stores the retrieved file system data as the disk closed information in the reserved section (R).

15. The system of claim 14, wherein the processing module (121, 123), during the disk finalization operation, determines whether the file system data prepared for duplication is completely stored in the memory buffer before retrieving of the file system data, and, if the file system data is not completely stored in the memory buffer, retrieves file system data from the file system section (F51, F52, F61, F62, F71) and stores the retrieved file system data in the memory buffer.

## Patentansprüche

1. Verfahren zur Plattenfinalisierung für ein optisches Lese-/Schreib-System, mit den folgenden Schritten:
während eines Aufzeichnens von Daten auf dem optischen Speichermedium wird ein Aufzeichnungszustand festgestellt (5423);
**gekennzeichnet durch die weiteren Schritte:**
wenn der Aufzeichnungszustand anzeigt, dass schwerwiegende Schreibfehler oder Lesefehler eingetreten sind oder ein Fehler während eines Zugreifens auf einen Datei-Systemabschnitt (F51, F52, F61, F62, F71) aufgetreten ist, wird bestimmt, dass eine Auslösung eines Platten-Finalisierungsvorgangs erforderlich ist (S451); und
nach einer Bestimmung, dass eine Auslösung des Platten-Finalisierungsvorgangs erforderlich ist, wird der Platten-Finalisierungsvorgang ausgeführt, um auf dem optischen Speichermedium eine Platte-gesperrt-Information zu speichern,
wobei die Platte-gesperrt-Information eine Information umfasst, die betrifft, dass kein weiterer Inhalt auf dem optischen Speichermedium aufgezeichnet werden kann.

2. Verfahren nach Anspruch 1, wobei die Platte-gesperrt-Information in einem Einführungsbereich (lead-in area) (21) des optischen Speichermediums gespeichert wird.

3. Verfahren nach Anspruch 1 oder 2, weiterhin umfassend:
wenn der Aufzeichnungszustand anzeigt, dass kein weiterer Inhalt auf dem optischen Speichermedium aufgezeichnet werden kann, oder dass das optische Speichermedium voll ist, wird bestimmt, dass eine Auslösung des Platten-Finalisierungsvorgangs erforderlich ist (S441).

4. Verfahren nach einem der vorhergehenden Ansprüche, weiterhin umfassend:
wenn der Aufzeichnungszustand anzeigt, dass Daten vollständig aufgezeichnet wurden, wird bestimmt, ob der verbleibende Platz auf dem optischen Speichermedium kleiner als ein vorbestimmter Schwellenwert ist (S451); und
falls der verbleibende Platz auf dem optischen Speichermedium kleiner als der vorbestimmte Schwellenwert ist, wird bestimmt, dass eine Auslösung des Platten-Finalisierungsvorgangs erforderlich ist (S441).

5. Verfahren nach einem der vorhergehenden Ansprüche, wobei ein Daten-/Programm-Bereich (22) des optischen Speichermediums einen reservierten Abschnitt (R) zum Speichern der Platte-gesperrt-Information und zumindest einen Datei-Systemabschnitt (F51, F52, F61, F62, F71) umfasst, der Datei-Systemdaten speichert, die Datei-Zugriffsinformation enthält, die betrifft, wo eine bestimmte Datei lokalisiert ist.

6. Verfahren nach Anspruch 5, wobei der Schritt des Ausführens des Platten-Finalisierungsvorgangs weiterhin umfasst:
die Datei-Systemdaten werden von einem Pufferspeicher des optischen Lese-/Schreibsystems abgerufen (S941); und
die abgerufenen Datei-Systemdaten werden als die Platte-gesperrt-Information in dem reservierten Abschnitt gespeichert (S951).

7. Verfahren nach Anspruch 6, wobei der Schritt des Ausführens des Platten-Finanzierungsvorgangs außerdem umfasst:
bevor die Datei-Systemdaten von dem Pufferspeicher abgerufen werden, wird bestimmt, ob die zur Duplizierung aufbereiteten Datei-Systemdaten vollständig in dem Pufferspeicher gespeichert sind (S921); und
wenn die Datei-Systemdaten nicht vollständig in dem Pufferspeicher gespeichert sind, werden Datei-Systemdaten von dem Datei-Systemabschnitt des optischen Speichermediums abgerufen und werden die abgerufenen Datei-Systemdaten in den Pufferspeicher für den Platten-Finalisierungsvorgang gespeichert (S931).

8. Maschinenlesbares Speichermedium, das ein Computerprogramm speichert, das einen Platten-Finalisierungsprozess für ein optisches Lese-/Schreibsystem nach einem der vorhergehenden Ansprüche ausführt, wenn dieses ausgeführt wird.

9. System zur Plattenfinalisierung, umfassend:
eine mechanische Einrichtung (11), die auf Daten von einem darin eingeführten optischen Speichermedium zugreift; und
ein Verarbeitungsmodul (121, 123); **dadurch gekennzeichnet, dass** das Verarbeitungsmodul (121, 123) während einer Aufzeichnung von Daten auf dem optischen Speichermedium einen Aufzeichnungszustand feststellt und dann, wenn der Aufzeichnungszustand anzeigt, dass schwerwiegende Schreibfehler oder Lesefehler eingetreten sind oder dass ein Fehler aufgetreten ist, wenn die mechanische Einrichtung (11) gerade auf einen Datei-Systemabschnitt (F51, F52, F61, F62, F71) zugreift, bestimmt, dass eine Auslösung des Platten-Finalisierungsvorgangs erforderlich ist, und das nach der Bestimmung, dass eine Auslösung des Platten-Finalisierungsvorgangs erforderlich ist, den Platten-Finalisierungsvorgang **dadurch** ausführt, dass die mechanische Einrichtung angewiesen wird, eine Platte-gesperrt-Information auf dem optischen Speichermedium aufzuzeichnen,
wobei die Platte-gesperrt-Information eine Information umfasst, die betrifft, dass kein weiterer Inhalt auf dem optischen Speichermedium mehr aufgezeichnet werden kann.

10. System nach Anspruch 9, wobei die Platte-gesperrt-Information auf einem Einführungsbereich (21) des optischen Speichermediums aufgezeichnet wird.

11. System nach Anspruch 10, wobei das Verarbeitungsmodul (121, 123) während einer Aufzeichnung von Daten auf dem optischen Speichermedium einen Aufzeichnungszustand feststellt und dann, wenn der Aufzeichnungszustand anzeigt, dass kein weiterer Inhalt auf dem optischen Speichermedium aufgezeichnet werden kann oder dass das optische Speichermedium voll ist, bestimmt, dass eine Auslösung des Platten-Finalisierungsvorgangs erforderlich ist.

12. System nach einem der Ansprüche 9 bis 11, wobei das Verarbeitungsmodul (121, 123) während einer Aufzeichnung von Daten auf dem optischen Speichermedium einen Aufzeichnungszustand feststellt, bestimmt, ob der verbleibende Platz auf dem optischen Speichermedium kleiner ist als ein vorbestimmter Schwellenwert, wenn der Aufzeichnungszustand anzeigt, dass Daten vollständig aufgezeichnet wurden, und dann, wenn der verbleibende Platz auf dem optischen Speichermedium kleiner als der vorbestimmte Schwellenwert ist, bestimmt, dass eine Auslösung des Platten-Finalisierungsvorgangs erforderlich ist.

13. System nach einem der Ansprüche 9 bis 12, wobei ein Daten-/Programmbereich (22) des optischen Speichermediums einen reservierten Abschnitt (R) zum Speichern der Platte-gesperrt-Information und zumindest einen Datei-Systemabschnitt (F51, F52, F61, F62, F71) umfasst, der Datei-Systemdaten speichert, die eine Datei-Zugriffsinformation enthalten, die betrifft, wo sich eine bestimmte Datei befindet.

14. System nach Anspruch 13 weiterhin umfassend eine Speichereinrichtung (125), die einen Pufferspeicher umfasst, wobei das Verarbeitungsmodul (121, 123) während des Platten-Finalisierungsvorgangs die Datei-Systemdaten von dem Pufferspeicher abruft und die abgerufenen Datei-Systemdaten als die Platte-gesperrt-Information in dem reservierten Abschnitt (R) speichert.

15. System nach Anspruch 14, wobei das Verarbeitungsmodul (121, 123), während des Platten-Finalisierungsvorgangs bestimmt, ob die zur Duplizierung aufbereiteten Datei-Systemdaten vollständig in dem Pufferspeicher gespeichert wurden, bevor die Datei-Systemdaten abgerufen werden, und dann wenn die Datei-Systemdaten nicht vollständig in dem Pufferspeicher abgespeichert wurden, Datei-Systemdaten von dem Datei-Systemabschnitt (F51, F52, F61, F62, F71) abruft und die abgerufenen Datei-Systemdaten in dem Pufferspeicher speichert.

## Revendications

1. Une méthode de finalisation de disque pour un système optique de lectureécriture, comportant les étapes suivantes:
- la détection d'un état d'enregistrement au cours de l'enregistrement des données sur le support de stockage optique (S423);
**caractérisé par** les étapes additionnelles de:
détermination de la nécessité de déclencher une opération de finalisation d'un disque (S451) lorsque l'état d'enregistrement indique que se sont produites des erreurs fatales d'écriture ou de lecture ou une erreur lors de l'accès à une section du système de fichiers (F51, F52, F61, F62, F71) ; et
la mise en oeuvre d'une opération de finalisation de disque pour enregistrer une information de fermeture du disque sur le support de stockage optique (S441) à la suite de la détermination que le basculement de l'opération de finalisation de disque est requis"
dans laquelle l'information de fermeture du disque comporte une information relative au fait qu'aucun contenu additional ne peut être enregistré sur le support de stockage optique.

2. La méthode selon la revendication 1, dans laquelle l'information du fermeture de disque est enregistré dans une zone d'entrée (21) du support de stockage optique.

3. La méthode selon la revendication 1 ou 2, comportant en outre :
la détermination de la nécessité de déclencher une opération de finalisation d'un disque (S441) lorsque l'état d'enregistrement indique qu'aucun contenu additionnel ne peut être enregistré sur le support de mémoire optique ou lorsque le support d'enregistrement optique est plein.

4. La méthode selon l'une quelconque des revendications précédentes, comportant en outre:
la détermination que l'espace restant sur le support de stockage optique est inférieur à un seuil prédéterminé (S451) lorsque l'état d'enregistrement indique que les données sont complètement enregistrées; et
si l'espace restant sur le support de stockage optique est inférieur au seuil prédéterminé, la détermination de la nécessité de déclencher une opération de finalisation du disque (S441).

5. La méthode selon l' une quelconque des revendications précédentes, dans laquelle une zone de données/programme (22) du support de stockage optique comporte une section réservée (R) pour le stockage d'une information de fermeture du disque, et au moins une section du système de fichiers (F51, F52, F61, F62, F71) enregistrant des données du système de fichiers contenant l'information d'entrée des fichiers concernant l' espace auquel un fichier spécifique est localisé.

6. La méthode selon la revendication 5, dans laquelle l'étape de finalisation du disque comporte en outre:
la récupération de données du système du fichier à partir d'une mémoire tampon du système optique de lecture/écriture (S941) ; et
l' enregistrement des données recouvrées du système de fichiers en tant qu' information du fermeture du disque au sein de la section réservée (S951).

7. La méthode selon la revendication 6, dans laquelle l'opération de finalisation du disque comporte en outre:
la détermination que les données de système de fichiers préparées pour une duplication sont complètement enregistrées dans la mémoire tampon (S921) prélablement à la récupération de données du système du fichier de la mémoire tampon,; et
si les données du système de fichiers ne sont pas complètement enregistrées dans la mémoire tampon, l'extraction d'une donnée du système de fichiers de la section du système de fichiers du support de stockage optique et enregistrant les données du système de fichiers extraites dans la mémoire tampon pour l'opération de finalisation de disque (S931).

8. Un support de stockage exploitable par une machine enregistrant un programme informatique lequel, lors de son exécution, effectue un procédé de finalisation d'un disque pour un système optique de lecture/écriture selon l'une quelconque des revendications précédentes.

9. Un système pour la finalisation de disque comportant:
un dispositif mécanique (11) accédant à des données d'un support de stockage optique chargé; et
un module de traitement (121, 123); **caractérisé en ce que** le module de traitement (121, 123) détecte un état d'enregistrement au cours de l'enregistrement des données sur le support de stockage optique, et, lorsque l'état d'enregistrement indique que des erreurs fatales d' écriture ou de lecture se sont produites, ou encore qu'une erreur s'est produite lorsque le dispositif mécanique (11) accède à une section du système de fichiers (F51, F52, F61, F62, F71), la détermination de la nécessité de déclencher une opération de finalisation d'un disque (S441) lorsque l'état d'enregistrement indique qu'aucun contenu additionnel ne peut être enregistré sur le support de mémoire optique ou lorsque le support d'enregistrement optique est plein.
détermine que le déclenchement de l'opération de finalisation du disque est requis, et, à la suite de la détermination que le déclenchement de l'opération de finalisation du disque est requise, effectue l'opération de finalisation de disque en demandant au dispositif mécanique pour enregistrer l'information du fermeture de disque sur le support de stockage optique.

10. Le système selon la revendication 9, dans lequel l'information du fermeture du disque est enregistrée dans une zone d'entrée (21) du support de stockage optique.

11. Le système selon la revendication 10, dans lequel le module de traitement (121, 123) détecte un état d'enregistrement au cours de l'enregistrement des données sur le support de stockage optique, et, lorsque l'état d'enregistrement indique qu'aucun contenu additionnel ne peut être enregistré sur le support de stockage optique, ou que le support de stockage optique est plein, détermine que le déclenchement de l'opération de finalisation de disque est requis.

12. Le système selon l'une quelconque des revendications 9 à 11, dans lequel le module de traitement (121, 123) détecte un état d'enregistrement au cours de l'enregistrement des données sur le support de stockage optique, détermine si l'espace restant sur le support de stockage optique est inférieur à un seuil prédéterminé lorsque l'état d'enregistrement indique que des données sont complètement enregistrées, et, si l'espace restant sur le support de stockage optique est inférieur à un seuil prédéterminé, détermine que le basculement de l'opération de finalisation de disque est requis.

13. Le système selon l'une quelconque des revendications 9 à 12, dans lequel un secteur de données/programme (22) du support de stockage optique comporte une section réservée (R) pour enregistrer une information du fermeture de disque, et au moins une section du système de fichiers (F51, F52, F61, F62, F71) stockant des données du système de fichiers contenant l'information d'entrée de fichiers concernant l'espace auquel un fichier spécifique est localisé.

14. Le système selon la revendication 13, comportant en outre un dispositif de mémoire (125) comportant une mémoire tampon, dans lequel le module de traitement (121, 123), au cours de l'opération de finalisation de disque, extrait des données du système de fichiers de la mémoire tampon et enregistre les données extraites du système de fichiers comme l' information du fermeture de disque dans la section réservée (R).

15. Le système selon la revendication 14, dans lequel le module de traitement (121, 123) au cours de l'opération de finalisation de disque, détermine si les données du système de fichiers préparées pour la duplication sont complètement enregistrées dans la mémoire tampon avant l' extraction des données du système de fichiers, et,
récupère des données du système de fichiers à partir de la section du système de fichiers (F51, F52, F61, F62, F71) et enregistres les données extraites du système de fichiers dans la mémoire tampon si les données du système de fichiers ne sont pas complètement enregistrées dans la mémoire tampon.
